# FASCICULE DE BREVET EUROPEEN

(11) **EP 2 557 972 B1**
(45) Date de publication et mention de la délivrance du brevet: **14.05.2014**
(21) Numéro de dépôt: 11719351.6
(22) Date de dépôt: 12.04.2011
(51) Int. Cl.: A47J 27/08

(54) **APPAREIL DE CUISSON D'ALIMENTS SOUS PRESSION POURVU D'UN SELECTEUR ET D'UN ORGANE DE GESTION DE PRESSION**
GERÄT ZUM GAREN VON SPEISEN UNTER DRUCK MIT EINEM WAHLSCHALTER UND EINEM DRUCKREGELUNGSELEMENT
APPLIANCE FOR COOKING FOOD UNDER PRESSURE, PROVIDED WITH A SELECTOR AND A PRESSURE-MANAGEMENT MEMBER

(30) Priorité: 13.04.2010 FR 1052801
(43) Date de publication de la demande: 20.02.2013
(73) Titulaire: SEB S.A., 69130 Ecully (FR)
(72) Inventeur: CHAMEROY, Eric, F-21260 Veronnes (FR); CARTIGNY, Michel, Pierre, F-21310 Mirebeau (FR); RHETAT, Eric, F-21000 Dijon (FR)
(74) Mandataire: Weber, Jean-François
(86) Numéro de dépôt international: PCT/FR2011/050836
(87) Numéro de publication internationale: WO 2011/128579

(56) Documents cités:
- US-A1- 2003 116 578

## Description

### DOMAINE TECHNIQUE

La présente invention se rapporte au domaine technique général des appareils de cuisson d'aliments sous pression, notamment domestiques, comprenant une cuve et un couvercle destinés à être associés pour former une enceinte de cuisson étanche, lesdits appareils étant destinés à assurer la cuisson sous pression de vapeur des aliments contenus dans la cuve.

La présente invention concerne plus particulièrement un appareil de cuisson d'aliments sous pression comprenant d'une part un moyen de gestion de pression conçu pour agir sur le niveau de pression régnant dans l'appareil et d'autre part un sélecteur déplaçable manuellement selon une course totale prédéterminée pour commander au moins ledit moyen de gestion de pression.

### TECHNIQUE ANTERIEURE

On connaît déjà des appareils de cuisson sous pression comprenant une cuve et un couvercle destiné à être verrouillé sur la cuve par l'intermédiaire d'un moyen de verrouillage / déverrouillage susceptible d'évoluer entre une position de verrouillage du couvercle relativement à la cuve à une position de déverrouillage. Ces appareils connus sont également généralement dotés d'un moyen de décompression permettant de faire chuter la pression au sein de l'appareil, notamment en fin de processus de cuisson, pour ouvrir le couvercle dans des conditions de sécurité acceptables pour l'utilisateur.

Dans ces appareils connus, le passage du moyen de verrouillage / déverrouillage de sa position de verrouillage à sa position de déverrouillage (et vice-versa) est piloté par un premier organe de commande, lequel comprend par exemple deux boutons-poussoirs pour commander respectivement le verrouillage et le déverrouillage. La commande du moyen de décompression est quant à elle effectuée à l'aide d'un deuxième organe de commande distinct du premier organe de commande, et se présentant par exemple sous la forme d'une bague rotative.

Cette multiplicité d'organes de commande peut rendre le maniement de ces appareils peu ergonomique, en contraignant l'utilisateur à effectuer une séquence d'opérations distinctes pour activer la décompression et déverrouiller le couvercle, en vue d'accéder aux aliments contenus dans l'appareil. De surcroît, la multiplicité et la diversité des organes de commande présents sur ces autocuiseurs de l'art antérieur peuvent engendrer des conceptions mécaniques complexes, susceptibles de conduire à des risques en matière de fiabilité.

Afin notamment de remédier à ces problèmes, il a été proposé un appareil de cuisson d'aliments sous pression doté d'un organe de commande unique et commun permettant de commander à la fois le verrouillage / déverrouillage et la décompression. Cet organe de commande unique et commun se présente sous la forme d'une poignée rotative capable d'être déplacée manuellement par rotation entre trois positions, savoir une position de verrouillage étanche autorisant la montée en pression de l'appareil, une position de verrouillage et décompression permettant une fuite de vapeur de l'intérieur de l'enceinte de cuisson vers l'extérieur alors que le couvercle reste verrouillé sur la cuve et une position de déverrouillage et décompression autorisant la désolidarisation du couvercle et de la cuve.

Un tel appareil, s'il donne globalement satisfaction, n'en présente pas moins certains inconvénients.

Ainsi, cet appareil ne permet pas de sélectionner différents niveaux de pression de fonctionnement. Seule la cuisson à un niveau de pression de fonctionnement prédéterminé unique, correspondant à la position de verrouillage étanche, est possible. Cela provient du fait que la conception retenue se prête mal à la mise en oeuvre d'une multiplicité de positions distinctes de la poignée rotative correspondant à différents niveaux de pression. En effet, la poignée rotative entraîne en rotation une plaque pourvue de rampes coopérant d'une part avec le système de mâchoires monté sur le couvercle et permettant le verrouillage / déverrouillage et d'autre part avec la tête de la soupape de régulation. L'ajout de positions supplémentaires, autres que les positions de verrouillage étanche, de verrouillage et décompression et de déverrouillage et décompression, nécessiterait la mise en oeuvre d'une plaque rotative de diamètre beaucoup plus important, ce qui peut constituer un inconvénient en matière d'encombrement et d'ergonomie notamment. En outre, cette plaque rotative serait fragilisée par des lumières de longueurs importantes formant les rampes de commande, ce qui pourrait introduire une souplesse et une fragilité de cette pièce induisant un risque en matière de fabilité et de sécurité d'utilisation.

On connaît également du document US-2003/0116578 un autocuiseur équipé d'un loquet de verrouillage monté sur une poignée de cuve et d'un bouton poussoir destiné à venir presser une soupape.

### EXPOSE DE L'INVENTION

Les objets assignés à l'invention visent en conséquence à porter remède aux divers inconvénients énumérés précédemment et à proposer un nouvel appareil de cuisson d'aliments qui, tout en étant de construction simple et compacte, autorise une multiplicité de modes de fonctionnement distincts et est facile, intuitif et rassurant à utiliser.

Un autre objet de l'invention vise à proposer un nouvel appareil de cuisson d'aliments sous pression dont le fonctionnement est particulièrement intuitif.

Un autre objet de l'invention vise à proposer un nouvel appareil de cuisson d'aliments sous pression particulièrement compact, fiable et léger.

Un autre objet de l'invention vise à proposer un nouvel appareil de cuisson d'aliments sous pression particulièrement ergonomique.

Un autre objet de l'invention vise à proposer un nouvel appareil de cuisson d'aliments sous pression qui limite les possibilités pour l'utilisateur de commettre des erreurs dans son maniement.

Un autre objet de l'invention vise à proposer un nouvel appareil de cuisson d'aliments sous pression dont la conception et le montage sont simplifiés.

Un autre objet de l'invention vise à proposer un nouvel appareil de cuisson d'aliments sous pression dont la conception est particulièrement compacte.

Un autre objet de l'invention vise à proposer un nouvel appareil de cuisson d'aliments sous pression qui permet un verrouillage franc et net du couvercle relativement à la cuve.

Un autre objet de l'invention vise à proposer un nouvel appareil de cuisson d'aliments sous pression de conception particulièrement robuste.

Un autre objet de l'invention vise à proposer un nouvel appareil de cuisson d'aliments sous pression particulièrement pratique à utiliser.

Les objets assignés à l'invention sont atteints à l'aide d'un appareil de cuisson d'aliments sous pression comprenant :
- une cuve et un couvercle destinés à être associés pour former une enceinte de cuisson,
- un moyen de verrouillage / déverrouillage monté mobile sur le couvercle entre une position de verrouillage et une position de déverrouillage du couvercle relativement à la cuve,
- un moyen de gestion de pression conçu pour agir sur le niveau de pression régnant dans l'appareil,
- et un sélecteur déplaçable manuellement selon une course totale prédéterminée pour commander au moins ledit moyen de gestion de pression et le déplacement du moyen de verrouillage / déverrouillage,
ledit appareil étant caractérisé en ce que le sélecteur n'est lié mécaniquement au moyen de gestion de pression que sur une première fraction de ladite course totale prédéterminée.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre d'exemples illustratifs et non limitatifs dans lesquels:

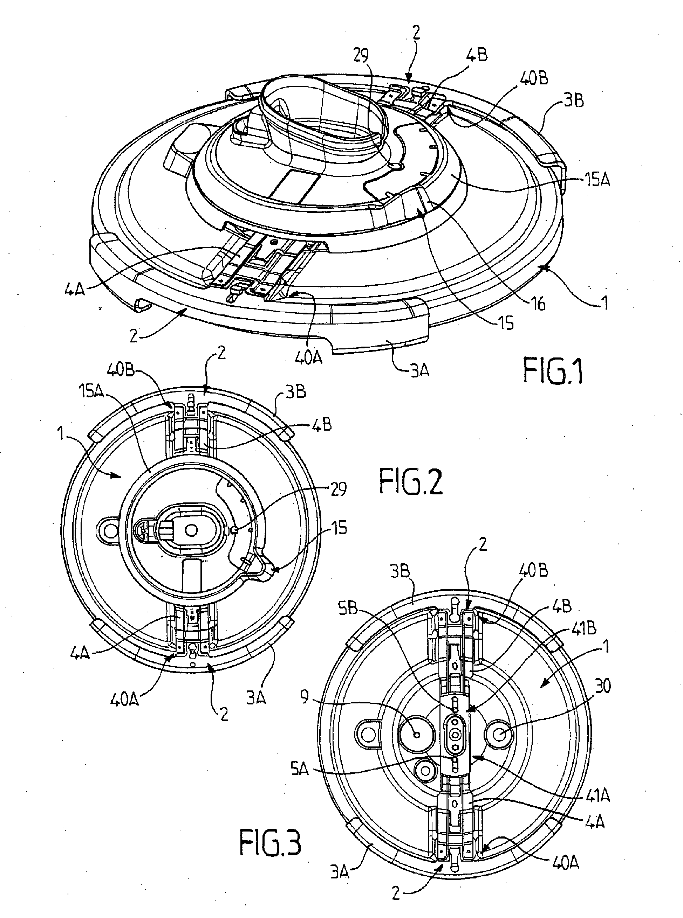

- La figure 1 illustre, selon une vue en perspective, un sous-ensemble de couvercle d'un appareil de cuisson conforme à un premier mode de réalisation de l'invention, ledit sous-ensemble étant formé par le couvercle proprement dit, sur lequel sont montés d'une part un moyen de verrouillage / déverrouillage (constitué en l'espèce par un système de mâchoires montées à translation radiale) illustré en position de déverrouillage et d'autre part un module de commande monté sur le couvercle, ledit module de commande incorporant le moyen de gestion de pression et le sélecteur déplaçable manuellement pour commander le déplacement du moyen de verrouillage / déverrouillage et celui du moyen de gestion de pression.
- La figure 2 illustre, selon une vue de dessus, le sous-ensemble de la figure 1 avec son moyen de verrouillage déverrouillage qui se trouve toujours en position de déverrouillage.
- La figure 3 est une vue similaire à celle de la figure 2 aux différences près que le module de commande a été omis et que le moyen de verrouillage / déverrouillage se trouve en position de verrouillage.
- La figure 4 illustre, selon une vue en perspective, un détail de réalisation du module de commande des figures 1 et 2, le module de commande se trouvant dans une configuration de verrouillage et décompression dans laquelle le moyen de verrouillage / déverrouillage est en position de verrouillage tandis que l'intérieur de l'enceinte de cuisson est mis en communication avec l'extérieur de façon permanente pour permettre une chute de la pression régnant dans l'enceinte de cuisson.
- La figure 5 illustre, selon une vue de dessus, le détail de réalisation de la figure 4.
- La figure 6 est sensiblement similaire à la figure 4 à la différence près que le sélecteur et la pièce qui le porte n'ont pas été représentés.
- La figure 7 est sensiblement similaire à la figure 6 à la différence près qu'une pièce de commande interposée entre le sélecteur et une première pièce de transmission pour agir sur la position de cette dernière en réponse à un déplacement du sélecteur n'a pas été représentée.
- La figure 8 correspond à la figure 7 en vue de dessus.
- La figure 9 illustre, selon une vue en perspective, la coopération de la pièce de commande et de la première pièce de transmission permettant à la pièce de commande d'entraîner la première pièce de transmission vers une position correspondant au déverrouillage du couvercle relativement à la cuve.
- La figure 10 illustre, selon une vue en perspective de dessous, la première pièce de transmission de l'appareil des figures 1 à 9.
- La figure 11 est une vue similaire à celle de la figure 5 à la différence près que le module de commande se trouve dans une configuration de verrouillage étanche avec régulation de pression à une première valeur de consigne.
- La figure 12 est une vue similaire à celle de la figure 11 à la différence près que le module de commande se trouve dans une configuration de verrouillage étanche avec régulation de pression à une deuxième valeur de consigne.
- La figure 13 représente une vue similaire à celle de la figure 4 à la différence près que le module de commande se trouve dans une configuration de déverrouillage selon laquelle le moyen de verrouillage / déverrouillage se trouve en position de déverrouillage du couvercle relativement à la cuve tandis que l'intérieur de l'enceinte est mis en communication permanente avec l'extérieur de façon à empêcher toute montée en pression de l'enceinte.
- La figure 14 illustre, selon une vue de dessus, le module de commande de la figure 13.
- La figure 15 est une vue similaire à celle de la figure 7 à la différence près que le module de commande se trouve dans sa configuration de déverrouillage illustrée également aux figures 13 et 14.
- La figure 16 est une vue de dessus du détail de réalisation illustré à la figure 15.
- La figure 17 illustre, selon une vue en perspective, le module de commande des figures précédentes à l'instant où la pièce de commande vient engager la première pièce de transmission pour déclencher un verrouillage brusque du couvercle relativement à la cuve par retour élastique de la première pièce de transmission vers une position de rappel correspondant au verrouillage.
- La figure 18 illustre un détail de réalisation de la figure 17 où seules la première pièce de transmission et la pièce de commande sont représentées.
- La figure 19 est une vue de détail agrandie de la figure 17.
- La figure 20 illustre, selon une vue en perspective, un module de commande d'un appareil de cuisson conforme à un deuxième mode de réalisation, ledit module de commande se trouvant dans une configuration de déverrouillage correspondant à celle de la figure 13 en ce qui concerne le premier mode de réalisation.
- La figure 21 illustre, selon une vue en perspective, le module de la figure 20 dans une configuration de verrouillage et décompression correspondant à celle de la figure 4 en ce qui concerne le premier mode de réalisation.
- La figure 22 illustre, selon une vue en perspective, le module de commande des figures 20 et 21 dans une configuration de verrouillage étanche avec régulation de pression à une première valeur de consigne, correspondant à celle illustrée à la figure 11 pour le premier mode de réalisation.
- La figure 23 illustre, selon une vue en perspective, le module de commande des figures 20 à 22 dans une configuration de verrouillage étanche avec régulation de pression à une deuxième valeur de consigne, correspondant à celle illustrée à la figure 12 en ce qui concerne le premier mode de réalisation.
- La figure 24 illustre un détail de réalisation du module de commande des figures 20 à 23, et plus précisément la coopération d'une pièce d'arrêt avec une pièce de commande permettant le verrouillage brusque du couvercle relativement à la cuve.
- La figure 25 est une vue similaire à celle de la figure 24 mais qui illustre cette fois le blocage de la première pièce de transmission par la pièce d'arrêt afin d'empêcher le retour élastique de la première pièce de transmission dans une position correspondant au verrouillage.

### MEILLEURE MANIERE DE REALISER L'INVENTION

L'appareil de cuisson d'aliments sous pression conforme à l'invention est destiné à assurer la cuisson de différents aliments à un niveau de pression sensiblement supérieur à la pression atmosphérique, de préférence dans un contexte domestique, étant entendu que l'invention peut également concerner des appareils professionnels ou semi-professionnels.

L'appareil conforme à l'invention est donc avantageusement un ustensile de cuisine présentant un caractère portatif (c'est-à-dire qu'il peut être déplacé manuellement) et indépendant. De façon classique, l'appareil conforme à l'invention est conçu pour monter en pression exclusivement sous l'effet d'une source de chauffe (embarquée ou externe), sans apport de pression externe. De façon préférentielle, l'appareil de cuisson conforme à l'invention est un autocuiseur.

L'appareil de cuisson sous pression comprend avantageusement une cuve (non illustrée) formant un récipient de cuisson et présentant avantageusement sensiblement une symétrie de révolution selon un axe vertical. Par la suite, l'adjectif « *axial »* se référa à la direction de cet axe de symétrie, direction qui s'apparente donc à la direction verticale lorsque l'appareil est en fonctionnement normal, c'est-à-dire repose sur un plan horizontal. La cuve est de manière classique fabriquée à partir d'un matériau métallique tel que l'acier inoxydable, et est par exemple pourvue d'un fond thermo-conducteur solidarisé à la cuve par toute technique appropriée (frappe à chaud ou à froid par exemple). L'appareil comprend également avantageusement un couvercle 1, lesdits cuve et couvercle 1 étant destinés à être associés pour former une enceinte de cuisson. Plus précisément, le couvercle 1 est destiné à être rapporté et verrouillé sur la cuve pour former avec cette dernière une enceinte de cuisson sensiblement étanche, c'est-à-dire suffisamment hermétique pour permettre une montée en pression de l'intérieur de l'enceinte, y compris à des niveaux élevés (par exemple excédant la pression atmosphérique de 4,5 à 120 kPa). Le couvercle 1 est de préférence de forme générale discoïde, et s'étend avantageusement dans un plan moyen sensiblement parallèle au plan moyen d'extension du fond de la cuve lorsqu'il est rapporté et verrouillé sur cette dernière. Le couvercle 1 est avantageusement réalisé en un matériau rigide, comme par exemple un matériau métallique.

L'appareil de cuisson d'aliments sous pression comprend avantageusement un moyen de verrouillage/ déverrouillage 2 qui permet le verrouillage du couvercle 1 sur la cuve afin d'éviter de voir le couvercle 1 échapper brutalement sous l'effet de la montée en pression de l'enceinte formée par la cuve et le couvercle. Le moyen de verrouillage / déverrouillage 2 est mobile entre une position de verrouillage (illustrée à la figure 3) et une position de déverrouillage (illustrée aux figures 1 et 2) du couvercle 1 relativement à la cuve. Le moyen de verrouillage / déverrouillage 2 assure donc lui-même directement, lorsqu'il se trouve en position de verrouillage, l'établissement d'une liaison mécanique entre le couvercle 1 et la cuve empêchant la désolidarisation du couvercle 1 et de la cuve. Le moyen de verrouillage / déverrouillage 2 peut être constitué par tout moyen de verrouillage / déverrouillage mobile connu de l'homme du métier. Comme illustré aux figures, le moyen de verrouillage / déverrouillage 2 est monté mobile sur le couvercle 1 entre sa position de verrouillage et sa position de déverrouillage du couvercle 1 relativement à la cuve, c'est-à-dire qu'il est directement solidaire du couvercle 1, tout en conservant une faculté de mobilité par rapport à ce dernier. De préférence, le moyen de verrouillage / déverrouillage 2 est monté à translation sur le couvercle 1, comme illustré aux figures 1 à 3.

Avantageusement, le moyen de verrouillage / déverrouillage 2 comprend au moins d'une part un élément de verrouillage 3A conçu pour assujettir le couvercle 1 à la cuve en position de verrouillage et permettre le désassemblage du couvercle 1 relativement à la cuve en position de déverrouillage. Dans l'exemple illustré aux figures, le moyen de verrouillage / déverrouillage 2 comprend deux éléments de verrouillage 3A, 3B montés de manière diamétralement opposée sur le couvercle 1 et conçu pour coulisser radialement sur le couvercle 1 entre une position déployée (illustrée à la figure 2) correspondant au verrouillage, et une position rétractée (illustrée aux figures 1 et 3) correspondant au verrouillage. Dans l'exemple illustré aux figures, chaque élément de verrouillage 3A, 3B est constitué par une mâchoire, c'est-à-dire un profilé métallique dont la section transversale est sensiblement en forme de U, chaque mâchoire étant destinée à venir enserrer, sur un secteur angulaire correspondant à la longueur de la mâchoire, à la fois le bord du couvercle et celui de la cuve. Un tel moyen de verrouillage / déverrouillage 2 à mâchoire(s), tel que celui mis en oeuvre dans le mode de réalisation des figures 1 à 3, est bien connu en tant que tel, et ne sera donc pas décrit plus avant ici. A titre alternatif, le moyen de verrouillage / déverrouillage 2 peut mettre en oeuvre, à la place des mâchoires, des segments métalliques destinés à pénétrer dans des ouvertures ménagées dans la cuve, à la manière d'un pêne dans une gâche. D'autres types de moyen de verrouillage / déverrouillage mobiles sont également envisageables, sans pour autant que l'on sorte du cadre de l'invention.

Avantageusement, et comme illustré aux figures, le moyen de verrouillage / déverrouillage 2 comprend au moins un bras 4A guidé en translation relativement au couvercle 1 et s'étendant entre une extrémité externe 40A reliée à l'élément de verrouillage 4A et une extrémité interne 41A pourvue d'un pion d'entraînement 5A dont la fonction sera précisée dans ce qui suit. Bien entendu, le moyen de verrouillage / déverrouillage 2 comprend autant de bras qu'il y a d'éléments de verrouillage. Ainsi, dans l'exemple illustré aux figures, le moyen de verrouillage / déverrouillage 2 comprend deux bras 4A, 4B guidés en translation relativement au couvercle et s'étendant chacun entre une extrémité externe 40A, 40B reliée à l'élément de verrouillage et une extrémité interne 41A, 41B pourvue d'un pion d'entraînement correspondant 5A, 5B. Les pions 5A, 5B, bras 4A, 4B et éléments de verrouillage 3A, 3B constituent ainsi deux sous-ensembles unitaires respectifs qui coulissent radialement sur le couvercle 1.

De préférence, le moyen de verrouillage / déverrouillage 2 est soumis à une force de rappel qui tend à le rappeler en permanence dans sa position de verrouillage. A cette fin, chaque bras 4A, 4B est par exemple relié vers son extrémité externe correspondante 40A, 40B à un ressort de rappel qui exerce en permanence une force de rappel radiale centripète sur le sous-ensemble pion/bras/mâchoire. De préférence, le ressort de rappel en question (non illustré) relie chacune des extrémités externes 40A, 40B des bras 4A, 4B, lesquels sont disposés de manière diamétralement opposée, de façon qu'avec un unique ressort on effectue un rappel simultané des deux éléments de verrouillage 3A, 3B.

L'appareil de cuisson d'aliments sous pression comprend par ailleurs un moyen de gestion de pression 6, qui est de préférence mobile entre une pluralité de positions. Le moyen de gestion de pression 6 est conçu pour agir sur le niveau de pression régnant dans l'appareil, c'est-à-dire en l'espèce dans l'enceinte formé par la cuve et le couvercle 1. Le moyen de gestion de pression 6 peut agir de différentes façons sur le niveau de pression régnant dans l'enceinte. Par exemple, le moyen de gestion de pression 6 peut permettre de modifier la valeur de consigne à laquelle la pression est régulée à l'intérieur de l'enceinte. A titre alternatif et/ou complémentaire, le moyen de gestion de pression 6 peut permettre la décompression de l'enceinte sur commande de l'utilisateur, en vue de déverrouiller le couvercle. Dans les modes de réalisation préférentiels illustrés aux figures, le moyen de gestion de pression 6 présente toutes les fonctions envisagées ci-avant, et comprend à cet effet différents organes permettant d'obtenir lesdites fonctions de réglage de la pression de consigne et de décompression de l'enceinte.

Dans ce cas, l'appareil de cuisson comprend avantageusement un organe de régulation 7 de la pression régnant dans l'enceinte de cuisson à une valeur de consigne, le moyen de gestion de pression 6 comprenant un moyen de réglage 8 de cette valeur de consigne. Le moyen de réglage 8 en question est mobile entre une pluralité de positions (par exemple deux positions distinctes) correspondant à des valeurs de consignes respectives. Avantageusement, l'organe de régulation 7 de la pression comprend un orifice 9 de mise en communication de l'intérieur de l'enceinte avec l'extérieur et une soupape tarée 10 mobile entre une position de libération de l'orifice 9 permettant la mise en communication de l'intérieur de l'enceinte avec l'extérieur lorsque la pression dans l'enceinte excède la valeur de consigne et une position d'obturation de l'orifice 9 par la soupape 10 afin de permettre à la pression de monter ou de se maintenir audit niveau de consigne. La soupape 10 peut être réalisée de toutes manières connues de l'homme du métier. Par exemple, la soupape 10 comprend une tête (non visible aux figures) destinée à venir alternativement obturer et libérer l'orifice 9 selon le niveau de pression régnant dans l'enceinte. La tête se prolonge avantageusement par une tige, laquelle s'épanouit enfin en une queue 11 dont le diamètre est supérieur à celui de la tige. La soupape 10 est soumise en permanence à une force de rappel élastique qui la rappelle dans sa position d'obturation. Lorsque la pression excède le niveau de consigne, la soupape 10 subit sous l'effet de la pression une force de soulèvement qui excède l'effort de rappel tendant à la maintenir dans sa position d'obturation et l'écarte ainsi de sa position d'obturation pour permettre une fuite de vapeur vers l'extérieur. Avantageusement, l'organe de régulation de pression 7 comprend un corps élastique (non visible aux figures) pour tarer ladite soupape 10 et la rappeler élastiquement dans sa position d'obturation de l'orifice 9 ainsi qu'une butée coulissante 12 formant le moyen de réglage 8 de la valeur de consigne. Le corps élastique en question, formé par exemple par un ressort hélicoïdal, est avantageusement interposé entre la soupape 10 et la butée coulissante 12 de manière à être contraint entre lesdites soupape 10 et butée coulissante 12, le niveau de contrainte dépendant de la plus ou moins grande proximité entre la soupape 10 et la butée coulissante 12. Le corps élastique exerce ainsi un effort d'appui sur la butée coulissante 12 et un effort de réaction (opposé à l'effort d'appui) sur la soupape 10. Le réglage de la position de la butée coulissante 12, par coulissement de cette dernière, permet ainsi de modifier l'effort d'appui et donc l'effort de réaction correspondant, ce qui permet de régler le tarage de la soupape 10.

Le moyen de réglage 8 de la valeur de consigne constitue ainsi dans ce cas un moyen d'ajustement du tarage.

Conformément aux modes de réalisation illustrés aux figures, le moyen de gestion de pression 6 comprend également un moyen de décompression mobile entre :
- une position de décompression permettant de faire chuter la pression régnant dans l'enceinte, en ménageant une mise en communication de l'intérieur de l'enceinte avec l'extérieur,
- et une position étanche n'entraînant sensiblement pas de chute de pression dans l'enceinte, l'enceinte de cuisson restant sensiblement hermétique lorsque le moyen de décompression se trouve dans sa position étanche.

De préférence, le moyen de décompression est conçu pour atteindre sa position de décompression quel que soit le niveau de pression régnant dans l'enceinte de cuisson. En d'autres termes, le moyen de décompression permet de réaliser (en position de décompression) une fuite de vapeur continue et permanente grâce à une mise en communication forcée de l'intérieur de l'enceinte avec l'extérieur, indépendamment du niveau de pression régnant dans l'enceinte.

De préférence, et conformément aux modes de réalisation illustrés aux figures, l'organe de régulation de pression 7 forme le moyen de décompression. Dans ce cas, la butée coulissante 12 est avantageusement conçue pour entraîner la soupape 10 dans sa position de libération de l'orifice 9 lorsque ladite butée 12 est soumise à un effort de libération suffisant de même sens que l'effort d'appui exercé par le corps élastique sur la butée coulissante 12. A cette fin, la butée 12 se présente avantageusement sous la forme d'un capuchon percé en son centre de manière à être traversée par la tige de la soupape 10. Un anneau d'arrêt 13 est monté sur la tige de la soupape 10 de façon à être interposé entre la tête 11 de la soupape 10 et la surface extérieure de la butée coulissante 12. Grâce à cette disposition, la butée coulissante 12 peut entraîner en déplacement la queue 11 de la soupape 10 en exerçant une poussée sur ladite queue 11 par l'intermédiaire de l'anneau d'arrêt 13.

Avantageusement, l'organe de régulation 7 de la pression comprend un conduit 14 au sein duquel est montée à coulissement la butée coulissante 12. Le conduit 14 en question s'étend avantageusement selon la direction verticale, de façon que la butée coulissante 12 coulisse verticalement dans ledit conduit 14 vers le bas (c'est-à-dire en direction du fond de cuve) ou vers le haut (en s'éloignant du fond de cuve). La butée coulissante 12 coiffe avantageusement le ressort hélicoïdal formant le corps élastique de tarage et de rappel de la soupape 10. Ainsi, un coulissement vers le bas de la butée coulissante 12 provoque une compression du ressort de rappel et de tarage, qui permet d'augmenter le tarage de la soupape 10, tandis qu'un coulissement de la butée coulissante 12 vers le haut provoque une relaxation du ressort (et donc une diminution du tarage) puis un soulèvement de la queue 11 de la soupape 10 qui permet de séparer la tête de soupape de l'orifice 9 quel que soit le niveau de pression régnant dans l'enceinte, ce qui provoque une décompression de cette dernière.

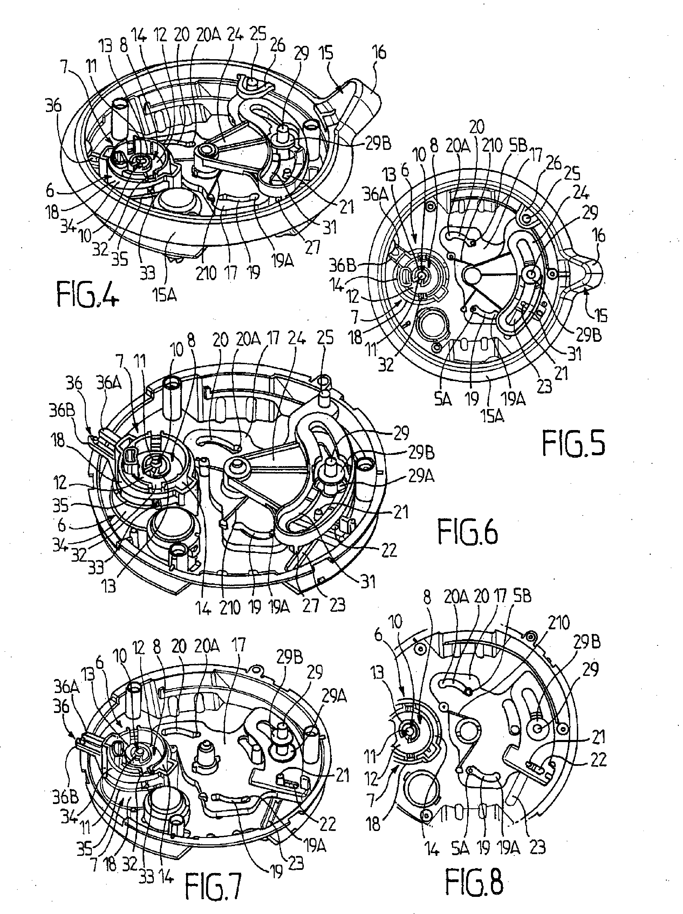

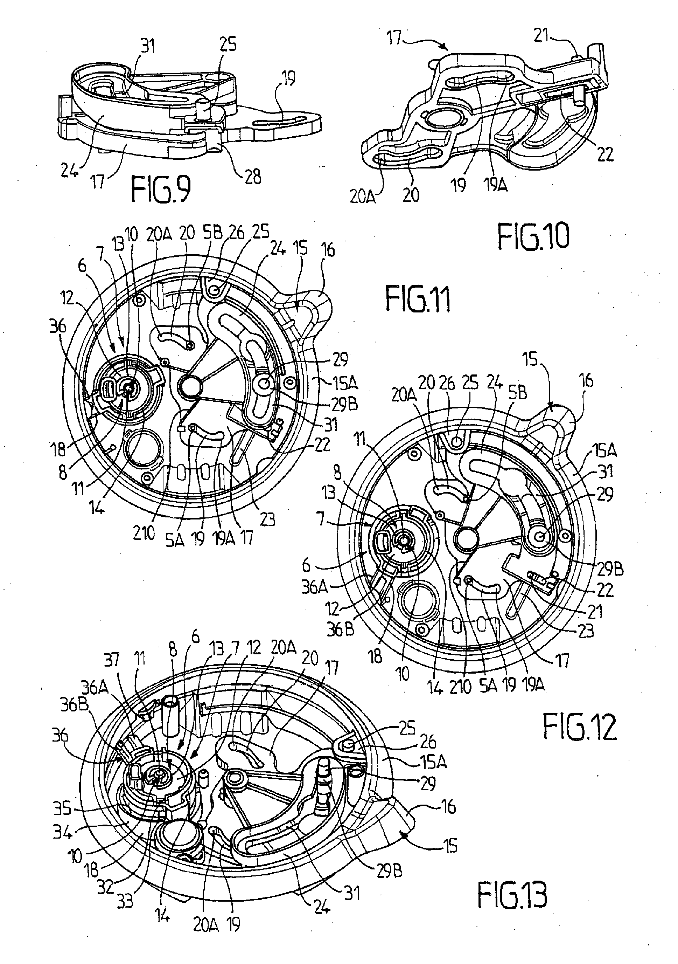

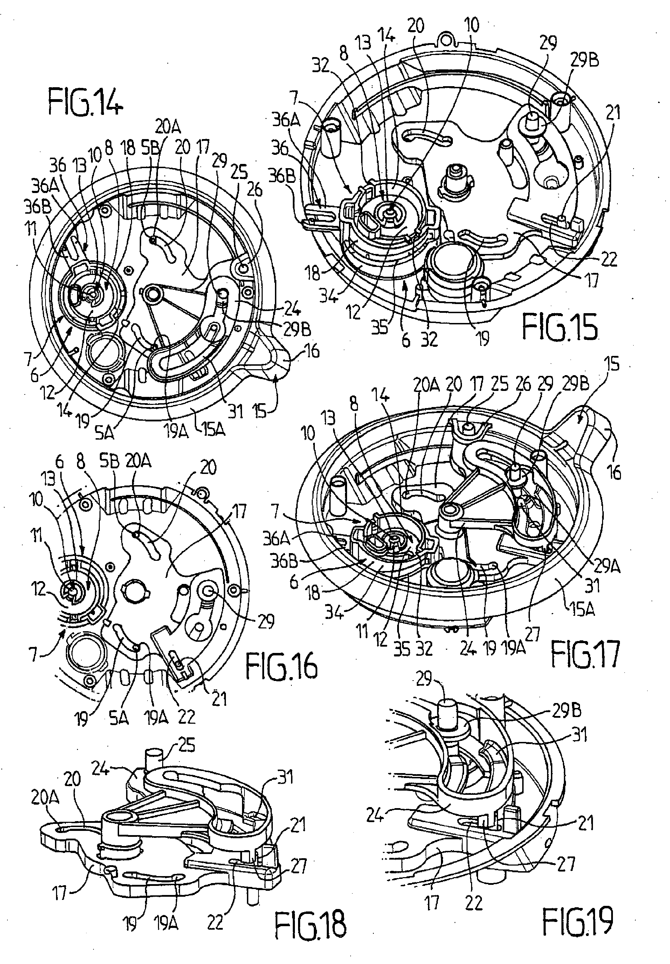

L'appareil de cuisson comprend également un sélecteur 15, de préférence rotatif, qui est déplaçable manuellement selon une course totale prédéterminée pour commander au moins ledit moyen de gestion de pression 6. En d'autres termes, le sélecteur 15 est mobile et peut être déplacé à la main par l'utilisateur de façon à permettre à ce dernier d'agir sur le moyen de gestion de pression 6, et de préférence de commander le déplacement de ce dernier entre ses différentes positions fonctionnelles. Le sélecteur 15 est par exemple conçu pour pouvoir se déplacer, lorsqu'il est actionné manuellement par l'utilisateur, entre deux positions extrêmes (illustrées par exemple respectivement aux figures 12 et 14), ladite course totale prédéterminée correspondant au chemin que peut parcourir le sélecteur 15 entre lesdites positions extrêmes. Conformément aux modes de réalisation illustrés aux figures, la première position extrême correspond à la configuration de déverrouillage du couvercle 1 relativement à la cuve tandis que la deuxième configuration extrême correspond à la configuration de verrouillage étanche avec régulation de pression à une deuxième valeur de consigne. Entre ces deux positions extrêmes, le sélecteur 15 peut avantageusement se déplacer selon une trajectoire en arc de cercle sur laquelle sont disposées des positions intermédiaires illustrées respectivement aux figures 5 et 11 (pour ce qui concerne le premier mode de réalisation). Le sélecteur 15 peut donc ainsi parcourir un secteur angulaire incluant différentes positions fonctionnelles prédéterminées, le secteur angulaire en question étant entièrement balayé par le sélecteur 15 lorsqu'il parcoure toute sa course totale prédéterminée.

Avantageusement, le sélecteur 15 n'est lié mécaniquement au moyen de gestion de pression 6 (pour en assurer la commande) que sur une première fraction de ladite course totale prédéterminée.

En d'autres termes, le sélecteur 15 est effectivement relié au moyen de gestion de pression 6 par une liaison mécanique destinée à permettre la commande du moyen de gestion de pression 6 par le sélecteur 15, mais cette liaison mécanique n'est pas permanente et n'existe que lorsque le sélecteur 15 parcourt une fraction seulement de sa course maximale possible, ladite fraction correspondant à la première fraction précitée.

De préférence, la liaison mécanique qui existe entre le sélecteur 15 et le moyen de gestion de pression 6 lorsque le sélecteur 15 parcourt ladite première fraction de la course totale est une liaison mécanique directe, qui met en oeuvre un contact direct entre le sélecteur 15 et le moyen de gestion de pression 6. Bien entendu, il est tout à fait envisageable de recourir à une liaison indirecte, qui ne met pas en oeuvre un contact direct entre le sélecteur 15 et le moyen de gestion de pression 6 mais utilise des pièces intermédiaires, et éventuellement mobiles relativement au sélecteur 15 et/ou au moyen de gestion de pression 6.

Comme illustré, le sélecteur 15 est conçu pour commander également le déplacement du moyen de verrouillage / déverrouillage 2. Le sélecteur 15 est donc déplaçable manuellement selon ladite course totale prédéterminée pour commander au moins ledit moyen de gestion de pression 6 et le déplacement du moyen de verrouillage / déverrouillage 2. Comme illustré aux figures, le sélecteur 15 est distinct du moyen de verrouillage / déverrouillage 2.

Le sélecteur 15 peut ainsi être déplacé à la main par l'utilisateur de façon à permettre à ce dernier de commander par l'intermédiaire du sélecteur 15 le déplacement du moyen de verrouillage / déverrouillage 2 entre ses positions de verrouillage et de déverrouillage, mais également, et de façon concomitante ou non, le déplacement du moyen de gestion de pression 6 entre ses différentes positions fonctionnelles. Le sélecteur 15 assure ainsi avantageusement une double fonction puisqu'il forme un moyen de commande unique et commun du déplacement du moyen de verrouillage / déverrouillage 2 et du déplacement du moyen de gestion de pression 6. A cette fin, le sélecteur 15 comprend avantageusement au moins une manette 16 destinée à être saisie par l'utilisateur, par exemple entre le pouce et l'index, de manière à permettre à l'utilisateur de déplacer le sélecteur 15, de préférence en rotation autour de la direction verticale, c'est-à-dire dans le plan horizontal.

Avantageusement, le sélecteur 15 n'est lié mécaniquement au moyen de verrouillage / déverrouillage (pour en commander le déplacement) que sur une deuxième fraction de ladite course totale prédéterminée du sélecteur 15. En d'autres termes, la liaison mécanique existant entre le sélecteur 15 et le moyen de verrouillage déverrouillage 2 pour permettre la commande de ce dernier par le sélecteur 15 n'existe pas de manière permanente et continue. En fait, l'existence de cette liaison mécanique entre le sélecteur 15 et le moyen de verrouillage / déverrouillage 2 est conditionnée par la position du sélecteur 15. Le sélecteur 15 est ainsi indépendant du moyen de verrouillage/déverrouillage 2 lorsqu'il se déplace en dehors de la deuxième fraction de sa course totale, et est lié mécaniquement audit moyen de verrouillage / déverrouillage 2 lorsqu'il parcourt ladite deuxième fraction de la course totale prédéterminée.

Avantageusement, lesdites première et deuxième fractions de la course totale prédéterminée sont sensiblement au moins partiellement distinctes. Cela signifie que les première et deuxième fractions en question sont soit totalement distinctes, sans aucun recouvrement, soit se recouvrent partiellement, de sorte à partager une portion de course commune.

Grâce notamment aux caractéristiques techniques précitées, il n'est pas nécessaire de recourir à des pièces de grandes dimensions, fragilisées par de nombreuses lumières de passage, pour transmettre le mouvement du sélecteur 15 au moyen de gestion de pression 6 et/ou au moyen de verrouillage / déverrouillage 2.

Avantageusement, l'appareil conforme à l'invention comprend une première pièce de transmission 17 qui est mobile relativement au moyen de verrouillage déverrouillage 2. La première pièce de transmission 17 est en outre conçue pour agir sur la position du moyen de verrouillage / déverrouillage 2 en réponse à un déplacement correspondant du sélecteur 15. En d'autres termes, la première pièce de transmission 17 est capable d'entraîner le déplacement du moyen de verrouillage/déverrouillage 2 lorsque le sélecteur 15 est lui-même déplacé. La première pièce de transmission 17 est donc interposée entre le sélecteur 15 et le moyen de verrouillage / déverrouillage 2 pour transmettre à ce dernier l'ordre de déplacement donné par l'utilisateur par l'intermédiaire du sélecteur 15.

Avantageusement, la première pièce de transmission 17 est également conçue pour pouvoir se déplacer pendant que le sélecteur 15 reste sensiblement immobile et/ou rester sensiblement immobile pendant que le sélecteur 15 se déplace.

L'invention concerne donc à cet égard plusieurs alternatives, savoir :
- une première alternative selon laquelle la première pièce de transmission 17 est capable de se déplacer pendant que le sélecteur 15 reste sensiblement immobile,
- une deuxième alternative selon laquelle la première pièce de transmission 17 est capable de rester sensiblement immobile pendant que le sélecteur 15 se déplace,
- et une troisième alternative selon laquelle la première pièce de transmission 17 peut d'une part se déplacer pendant que le sélecteur 15 reste sensiblement immobile, et d'autre part rester sensiblement immobile pendant que le sélecteur 15 se déplace.

Dans le mode de réalisation illustré aux figures, la première pièce de transmission 17 met en oeuvre la troisième alternative précitée, c'est-à-dire qu'elle est capable d'une part de se déplacer selon une première course prédéterminée alors que le sélecteur 15 reste sensiblement immobile dans une position prédéterminée, et d'autre part de rester sensiblement immobile pendant que le sélecteur 15 se déplace selon une course prédéterminée entre au moins deux positions prédéterminées.

Ainsi, l'invention concerne un appareil dans lequel la mobilité de la première pièce de transmission 17 et celle du sélecteur 15 sont au moins partiellement découplées, ce qui autorise des cinématiques originales pour le dispositif mobile (constituées par le moyen de verrouillage / déverrouillage 2 ou le moyen de gestion de pression 6) conduisant à un fonctionnement particulièrement intuitif, ergonomique et efficace de l'appareil, sans compliquer la conception de ce dernier.

De préférence, la première pièce de transmission 17 est conçue pour rester sensiblement immobile lorsque le sélecteur 15 se déplace selon au moins une portion de ladite première fraction de sa course totale.

En d'autres termes, le sélecteur 15 est avantageusement découplé de la première pièce de transmission 17 (et donc en l'espèce du moyen de verrouillage / déverrouillage 2 dont il ne peut plus commander le déplacement) lorsqu'il est lié mécaniquement au moyen de gestion de pression 6 pour commander le déplacement de ce dernier, et ce sur au moins une portion, de préférence majoritaire, de ladite première fraction de sa course totale.

Avantageusement, l'appareil de cuisson comprend également une deuxième pièce de transmission 18 mobile relativement au moyen de gestion de pression 6. Ladite deuxième pièce de transmission 18 est également conçue pour agir sur la position du moyen de gestion de pression 6 en réponse à un déplacement correspondant du sélecteur 15. En d'autres termes, la deuxième pièce de transmission 18 est interposée entre le sélecteur 15 et le moyen de gestion de pression 6 pour transmettre à ce dernier un ordre communiqué par l'utilisateur par l'intermédiaire du sélecteur 15 en vue d'agir sur le niveau de pression régnant dans l'enceinte (par exemple pour faire chuter le niveau de pression et/ou l'ajuster à un niveau de consigne prédéterminé). Dans ce cas, la deuxième pièce de transmission 18 est-elle aussi conçue pour pouvoir se déplacer pendant que le sélecteur 15 reste sensiblement immobile et/ou rester sensiblement immobile pendant que le sélecteur 15 se déplace.

Dans les modes de réalisation préférentiels illustrés aux figures, il est par exemple prévu que :
- la première pièce de transmission 17 (mobile relativement au moyen de verrouillage / déverrouillage 2) est conçue pour pouvoir se déplacer pendant que le sélecteur 15 reste sensiblement immobile et rester sensiblement immobile pendant que le sélecteur 15 se déplace ;
- la deuxième pièce de transmission 18 est conçue pour pouvoir rester sensiblement immobile pendant que le sélecteur 15 se déplace, mais elle ne peut se déplacer sans que le sélecteur 15 ne se déplace lui-même.

De préférence, la deuxième pièce de transmission 18 est conçue pour rester sensiblement immobile lorsque le sélecteur 15 se déplace selon au moins une portion de ladite deuxième fraction de sa course totale.

En d'autres termes, le sélecteur 15 est avantageusement découplé de la deuxième pièce de transmission 18 (et donc en l'espèce du moyen de gestion de pression 6 dont il ne peut plus commander le déplacement) lorsqu'il est lié mécaniquement au moyen de verrouillage / déverrouillage 2 pour commander le déplacement de ce dernier, et ce sur au moins une portion, de préférence majoritaire, de ladite deuxième fraction de sa course totale.

Avantageusement, et comme illustré aux figures, la première pièce de transmission 17 est rotative. De préférence, la première pièce de transmission 17 est montée à rotation selon la direction verticale, de même que le sélecteur 15, de façon que le sélecteur 15 et la première pièce de transmission 17 se déplacent en rotation dans des plans sensiblement parallèles.

Comme illustré aux figures, chaque pion d'entraînement 5A, 5B du moyen de verrouillage / déverrouillage 2 coopèrent avantageusement avec la première pièce de transmission 17 pour entraîner le déplacement du pion 5A, 5B en réponse à un déplacement correspondant de la première pièce de transmission 17. A cet effet, la première pièce de transmission 17 est avantageusement pourvue d'au moins une rampe 19 coopérant avec le pion d'entraînement 5A, 5B pour entraîner le moyen de verrouillage / déverrouillage 2 en position de déverrouillage (illustrée aux figures 1 et 2) en réponse à un déplacement correspondant de la première pièce de transmission 17. Dans l'exemple des figures 1 à 19, la première pièce de transmission 17 comprend deux rampes 19, 20 coopérant respectivement avec les pions d'entraînement 5A, 5B pour commander le déplacement en translation radiale de ces derniers.

Par exemple, la première pièce de transmission 17 présente sensiblement une forme de plaque, les rampes 19, 20 étant formées par des lumières courbes ménagées à travers la plaque et dans lesquels sont engagés respectivement les pions d'entraînement 5A, 5B. Ainsi, sous l'effet du mouvement de rotation de la première pièce de transmission 17, les lumières formant les rampes 19, 20 vont exercer un effort de rapprochement ou d'écartement mutuel des pions d'entraînement 5A, 5B, lesquels sont guidés à coulissement radial sur le couvercle 1.

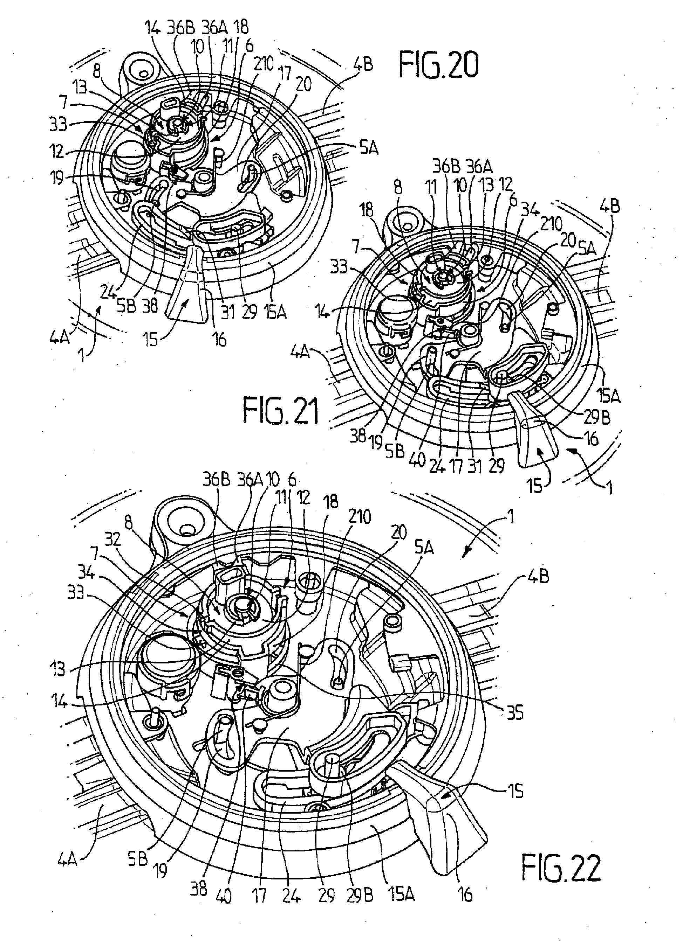

Dans les modes de réalisation illustrés aux figures, la première pièce de transmission 17 est avantageusement montée mobile entre une première position correspondant au verrouillage et une deuxième position correspondant au déverrouillage, ladite première pièce de transmission 17 étant soumise à un rappel élastique activable / désactivable vers sa première position. La première position en question est avantageusement la position de verrouillage et décompression illustrée notamment aux figures 8 et 21. Dans cette première position, la première pièce de transmission 17 maintient le moyen de verrouillage / déverrouillage en position de verrouillage (en agissant sur les pions d'entraînement 5A, 5B), ou du moins ne s'oppose pas au rappel élastique du moyen de verrouillage / déverrouillage en position de verrouillage. La deuxième position de la première pièce de transmission 17 correspond quant à elle à la position de déverrouillage illustrée notamment aux figures 13 et 14. Dans cette deuxième position, la première pièce de transmission 17 maintient les pions d'entraînement 5A, 5B selon un écartement mutuel suffisant pour placer le moyen de verrouillage déverrouillage 2 en position de déverrouillage. Le rappel élastique de la première pièce de transmission 17 vers sa première position est avantageusement obtenu à l'aide d'au moins un ressort 210, et par exemple un ressort de torsion qui exerce en permanence sur la première pièce de transmission 17 un effort de rappel élastique. Avantageusement, la force de rappel qui tend à rappeler le moyen de verrouillage / déverrouillage 2 en position de verrouillage contribue également à rappeler la première pièce de transmission 17 dans sa première position, par l'intermédiaire des pions d'entraînement 5A, 5B qui exercent sur les rampes correspondantes 19, 20 un effort tendant à rappeler la première pièce de transmission 17 vers sa première position.

Conformément aux modes de réalisation illustrés aux figures, le sélecteur 15 est mobile entre au moins une première position correspondant au verrouillage (illustrée par exemple aux figures 4, 5 et 21) et une deuxième position correspondant au déverrouillage (illustrée par exemple aux figures 13, 14 et 20). La première position en question correspond de préférence à une configuration de verrouillage et décompression, dans laquelle le moyen de verrouillage / déverrouillage 2 est en position de verrouillage, tandis que l'intérieur de l'enceinte est mis en communication avec l'extérieur pour permettre une chute de la pression régnant dans l'enceinte.

De préférence, le sélecteur 15 est conçu pour activer le rappel élastique de la première pièce de transmission 17 lorsque ledit sélecteur 15 est déplacé de sa deuxième position vers sa première position, autorisant ainsi le rappel élastique de la première pièce de transmission 17 de sa deuxième position vers sa première position. A cette fin, le moyen de verrouillage / déverrouillage 2 coopère avantageusement avec la première pièce de transmission 17 pour que la force de rappel auquel est soumis le moyen de verrouillage / déverrouillage 2 d'une part contribue à maintenir la première pièce de transmission 17 dans sa deuxième position tant que la première pièce de transmission 17 se trouve dans sa deuxième position et d'autre part ne s'oppose pas, ou même contribue, au rappel élastique de la première pièce de transmission 17 vers sa première position dès que la première pièce de transmission 17 s'est déplacée d'au moins une course prédéterminée de sa deuxième position vers sa première position. Dans le mode de réalisation des figures 1 à 19, cette mesure technique est mise en oeuvre de la façon suivante. Chaque rampe 19, 20 est pourvue à l'une de ses extrémités (occupée par le pion d'entraînement correspondant 5A, 5B en position de déverrouillage) d'un logement 19A, 20A conformé pour que la force de rappel exercée sur le moyen de verrouillage / déverrouillage 2 ait tendance à maintenir chacun des pions d'entraînement 5A, 5B dans son logement respectif 19A, 20A selon une position d'équilibre instable. Lorsque la première pièce de transmission 17 se déplace d'une course prédéterminée permettant de forcer chaque pion 5A, 5B à quitter son logement respectif 19A, 20A en surmontant la force de rappel du moyen de verrouillage / déverrouillage 2, chacun desdits pions d'entraînement 5A, 5B se retrouve alors dans une portion de la rampe correspondante 19, 20 conformée pour favoriser le rapprochement mutuel des pions d'entraînement 5A, 5B sous l'effet d'une part du rappel élastique auquel est soumis la première pièce de transmission 17, et d'autre part de la force de rappel à laquelle est soumis le moyen de verrouillage / déverrouillage 2. En d'autres termes, dès que les pions d'entraînement 5A, 5B ont quitté leur logement 19A, 20A, la première pièce de transmission 17 est brutalement soumise à un rappel élastique qui la ramène vers sa première position. Le rappel élastique de la première pièce de transmission 17 est ainsi désactivé (car inhibé par la conformation des logements 19A, 20A) lorsque les pions d'entraînement 5A, 5B se trouvent dans leur logement 19A, 20A, et activé dès que lesdits pions d'entraînement 5A, 5B quittent leur logement 19A, 20A.

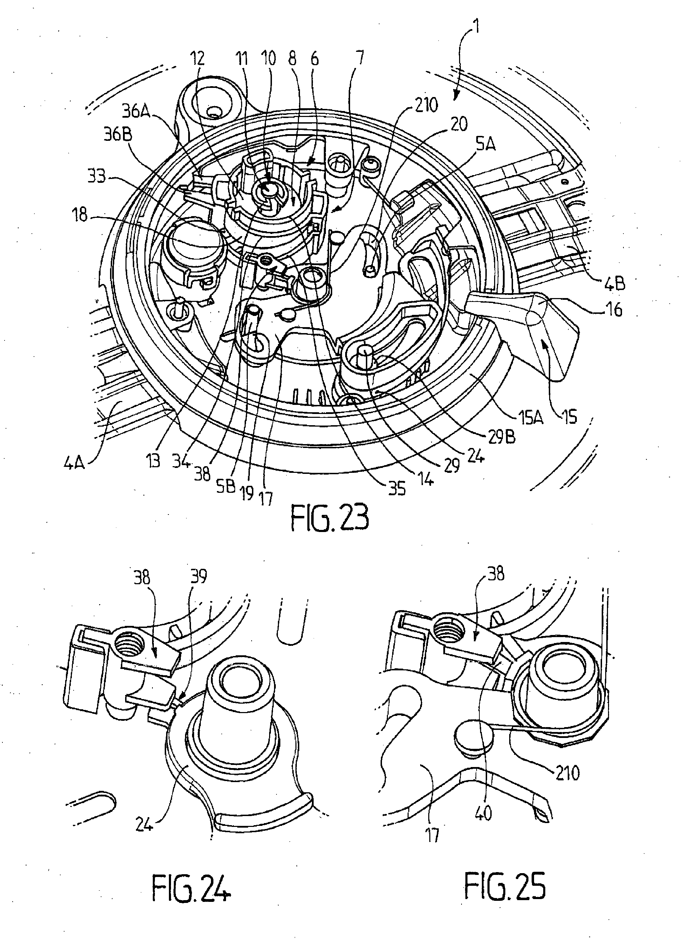

Dans le mode de réalisation des figures 20 à 25, il est prévu, en lieu et place d'une conformation spécifique des logements 19A, 20A, une pièce d'arrêt 38 montée à coulissement vertical entre une position basse de rappel élastique et une position haute. Lorsque l'utilisateur déplace le sélecteur 15 de la position de déverrouillage illustrée à la figure 20 à la position de verrouillage de la figure 21, la pièce de commande 24 vient soulever (grâce à une rampe 39), à l'approche de la position de verrouillage, la pièce d'arrêt 38 jusqu'à sa position haute. Ce passage de la pièce d'arrêt 38 de sa position basse à sa position haute fait que la pièce d'arrêt 38 n'interfère plus avec la trajectoire de la première pièce de transmission 17, et plus précisément avec la trajectoire d'une butée de blocage 40 solidaire de ladite pièce de transmission 17 et qui vient en butée de blocage contre la pièce d'arrêt 38 dans la configuration illustrée à la figure 20. La pièce de transmission 17 peut ainsi être librement rappelée dans sa première position par le ressort 210, et entraîner à cette occasion le moyen de verrouillage / déverrouillage 2 en position de verrouillage.

Avantageusement, et conformément aux modes de réalisation des figures 1 à 19, l'appareil comprend également un ergot d'entraînement 21 monté mobile entre une position active (illustrée aux figures 10 et 15 à 19) et une position inactive (illustrée par exemple aux figures 4 à 8). L'ergot d'entraînement 21 est conçu pour se trouver dans sa position inactive tant que la première pièce de transmission 17 n'est pas dans sa deuxième position définie précédemment, et pour se trouver dans sa position active lorsque la première pièce de transmission 17 se trouve dans sa deuxième position, le sélecteur 15 étant conçu pour coopérer avec l'ergot d'entraînement 21 en position active de façon à déplacer la première pièce de transmission 17 d'au moins ladite course prédéterminée évoquée précédemment (et permettant l'activation du rappel élastique de la première pièce de transmission 17) lorsque le sélecteur 15 se déplace de sa deuxième position vers sa première position. En d'autres termes, l'ergot d'entraînement 21 est conçu pour pouvoir, lorsqu'il est en position active, être entraîné par le sélecteur 15 lorsque ce dernier se déplace de sa deuxième position vers sa première position, l'ergot d'entraînement 21 entraînant lui-même en retour le déplacement puis le rappel de la première pièce de transmission 17 de sa deuxième position vers sa première position. Avantageusement, l'ergot d'entraînement 21 coopère avec la première pièce de transmission 17 pour que le déplacement de la première pièce de transmission 17 de sa première position dans sa deuxième position entraîne le passage de l'ergot d'entraînement 21 de sa position inactive dans sa position active. A cet effet, l'ergot d'entraînement 21 est de préférence monté à coulissement sur la première pièce de transmission 17. Par exemple, l'ergot d'entraînement 21 coulisse avantageusement dans une lumière 22 rectiligne ménagée dans la première pièce de transmission 17, tout en étant guidé concomitamment par une rainure 23 solidaire du couvercle 1, et donc par rapport à laquelle la première pièce de transmission 17 est mobile. Ce double guidage de l'ergot d'entraînement 21 par la lumière 22 et la rainure 23 permet d'opérer un déplacement en translation radiale de l'ergot d'entraînement 21, sous l'effet de la rotation de la première pièce de transmission 17, entre une position rétractée (illustrée par exemple à la figure 12) dans laquelle la distance entre l'ergot d'entraînement 21 et le centre de rotation de la première pièce d'entraînement 17 est minimale, et une position expansée (illustrée par exemple à la figure 15) dans laquelle la distance entre l'ergot d'entraînement 21 et le centre de rotation de la première pièce de transmission 17 est maximale, lesdites positions rétractée et expansée correspondant respectivement aux positions désactivée et activée de l'ergot de transmission 21. Ainsi, l'ergot d'entraînement 21 est conçu pour se trouver en position activée lorsque la première pièce d'entraînement se trouve elle-même dans sa deuxième position, et en position désactivée lorsque la première pièce de transmission 17 quitte sa deuxième position, par exemple en étant rappelée dans sa première position.

La coopération du sélecteur 15 avec l'ergot d'entraînement 21 pour déplacer la première pièce de transmission 17 d'au moins ladite course prédéterminée évoquée précédemment peut être effectuée de manière directe ou indirecte. Dans le mode de réalisation des figures 1 à 19, le sélecteur 15 coopère indirectement avec l'ergot d'entraînement 21, par l'intermédiaire d'une pièce de commande 24. Ladite pièce de commande 24 est avantageusement interposée entre le sélecteur 15 et la première pièce de transmission 17 pour agir sur la position de cette dernière en réponse à un déplacement correspondant du sélecteur 15. La pièce de commande 24 est avantageusement solidaire du sélecteur 15, c'est-à-dire qu'elle est montée fixe relativement au sélecteur 15. En revanche, la pièce de commande 24 est avantageusement mobile relativement à la première pièce de transmission 17, et est conçue pour coopérer mécaniquement avec cette dernière de façon à en commander le déplacement. A cet effet, la pièce de commande 24 est par exemple pourvue d'un plot de fixation 25, tandis que le sélecteur 15 comprend une couronne 15A rotative à laquelle est fixée la manette 16, cette dernière venant avantageusement de matière avec la couronne 15A. Ladite couronne 15A est avantageusement pourvue d'un élément femelle 26 dans lequel est enfilé le plot de fixation 25, de telle sorte que la manette 16 puisse entraîner en déplacement, par l'intermédiaire de la couronne 15A et de l'élément femelle 26, la pièce de commande 24 en rotation autour de l'axe vertical.

Il est également envisageable, comme dans le mode de réalisation des figures 20 à 25, que la couronne 15A porte un moyen de fixation mâle, tandis que la pièce de commande 24 porte un moyen de fixation femelle, l'essentiel étant que le sélecteur 15 puisse être solidarisé d'une manière ou d'une autre à la pièce de commande 24.

Avantageusement, la première pièce de transmission 17, la pièce de commande 24 et le sélecteur 15 sont tous montés à rotation autour d'un même axe de rotation verticale. Dans le mode de réalisation des figures 1 à 19, la première pièce de transmission 17 pivote autour de son axe de rotation dans un premier plan horizontal situé en deçà du second plan horizontal dans lequel pivote la pièce de commande 24. Au contraire, dans le mode de réalisation des figures 20 à 25, la première pièce de transmission 17 pivote autour de son axe de rotation dans un premier plan horizontal situé au-dessus du second plan horizontal dans lequel pivote la pièce de commande 24.

Conformément aux modes de réalisation des figures 1 à 19, la pièce de commande 24 est avantageusement pourvue d'un crochet d'entraînement 27 qui est conçu pour venir exercer une poussée dans le plan horizontal sur l'ergot d'entraînement 21 lorsque le sélecteur 15 se déplace de sa deuxième position (correspondant au déverrouillage) vers sa première position (correspondant au verrouillage) et que l'ergot d'entraînement 21 se trouve en position active. Le crochet d'entraînement 27 pousse ainsi sur l'ergot d'entraînement 21, ce qui a pour effet d'entraîner en rotation la première pièce de transmission 17 selon une course suffisante pour permettre aux pions d'entraînement 5A, 5B de sortir de leur logement 19A, 20A, ce qui entraîne alors le rappel élastique brusque de la première pièce de transmission 17 dans sa première position, ce rappel élastique brusque correspondant au retour du moyen de verrouillage / déverrouillage 2 en position de verrouillage. Le rappel élastique de la première pièce de transmission 17 s'accompagne du déplacement de l'ergot d'entraînement 21 de sa position active vers sa position inactive. En position inactive, l'ergot d'entraînement 21 n'interfère pas avec la trajectoire du crochet d'entraînement 27 lorsque le sélecteur se déplace de sa première position (de verrouillage) vers sa deuxième position (de déverrouillage).

La pièce de commande 24 est par ailleurs avantageusement pourvue d'un plot d'entraînement 28 qui est attaché à la pièce de commande 24 de façon à pouvoir entraîner la première pièce de transmission 17 de sa première position (correspondant au verrouillage) vers et dans sa deuxième position (correspondant au déverrouillage) lorsque le sélecteur 15 est lui-même déplacé de sa première position (correspondant au verrouillage) vers et dans sa deuxième position (correspondant au déverrouillage).

Avantageusement, l'appareil conforme à l'invention comprend un moyen de sécurité à l'ouverture 29 sensible à la pression et/ou à la température régnant dans l'enceinte, ledit moyen de sécurité à l'ouverture 29 étant conçu pour adopter, tant que la pression et/ou la température régnant dans l'enceinte est supérieure à une valeur prédéterminée de sécurité (par exemple excédant la pression atmosphérique d'une valeur comprise entre au moins 1 et 4 kPa pour la pression), une position de blocage (illustrée aux figures 4 à 8) dans laquelle il interfère avec la trajectoire de déplacement de la première pièce de transmission 17 pour empêcher le déverrouillage. Le moyen de sécurité à l'ouverture 29 est avantageusement sensible à la pression régnant dans l'enceinte, et est monté à coulissement vertical sur le couvercle 1 entre une position basse de fuite dans laquelle le moyen de sécurité à l'ouverture 29 autorise une fuite de vapeur de l'intérieur de l'enceinte vers l'extérieur par l'intermédiaire d'un orifice 30 empêchant ainsi la montée en pression de l'enceinte et une position haute (correspondant à la position de blocage) dans laquelle le moyen de sécurité à l'ouverture 29 ferme hermétiquement l'orifice 30 de façon à permettre la montée en pression de l'enceinte tout en interférant avec la trajectoire de déplacement de la première pièce de transmission 17 pour empêcher le déverrouillage. A cette fin, le moyen de sécurité à l'ouverture 29 est pourvu d'une première collerette 29A qui coopère avec une lumière ménagée à travers la première pièce de transmission 17 de la façon suivante :
- tant que la première pièce de transmission 17 se trouve dans sa deuxième position (correspondant au déverrouillage), la première collerette 29A vient en butée contre la première pièce de transmission 17 et empêche ainsi le moyen de sécurité à l'ouverture 29 d'atteindre sa position de blocage ; cette dernière ne peut être atteinte que lorsque la première pièce de transmission 17 se trouve en position de verrouillage, auquel cas le moyen de sécurité à l'ouverture 29 se trouve en regard d'une portion agrandie de la lumière en question qui autorise le passage de la première collerette 29A, permettant ainsi au moyen de sécurité à l'ouverture 29 d'atteindre sa position de blocage.
- une fois en position de blocage, la première collerette 29A est capturée dans la lumière ménagée dans la première pièce de transmission 17 (comme illustrée à la figure 7) et interdit de ce fait tout mouvement de la première pièce de transmission 17, en particulier vers sa deuxième position (correspondant au déverrouillage).

Le moyen de sécurité à l'ouverture 29 assure donc également, dans les modes de réalisation avantageux illustrés aux figures, une fonction de sécurité à la mauvaise fermeture en empêchant le moyen de sécurité à l'ouverture 29 d'atteindre sa position d'obturation de l'orifice 30 tant que la première pièce de transmission 17 ne se trouve pas dans une position adaptée correspondant au verrouillage du couvercle 1 relativement à la cuve.

Avantageusement, le moyen de sécurité à l'ouverture 29 est conçu pour interférer, en position de blocage, avec la trajectoire de déplacement de chacune desdites première pièce de transmission 17 et pièce de commande 24. Dans ce cas, qui constitue d'ailleurs une invention susceptible d'être protégée en tant que telle, indépendamment des autres aspects techniques décrits ici, le moyen de sécurité à l'ouverture 29 coopère avec deux pièces mobiles l'une par rapport à l'autre (savoir la première pièce de transmission 17 et la pièce de commande 24) lesdites pièces étant interposées entre le sélecteur 15 et le moyen de verrouillage / déverrouillage 2 pour agir sur la position du moyen de verrouillage / déverrouillage 2 en réponse à un actionnement du sélecteur 15 par l'utilisateur.

De préférence, le moyen de sécurité à l'ouverture 29 présente une deuxième collerette 29B qui coopère avec la pièce de commande 24 de la même façon que la première collerette 29A coopère avec la première pièce de transmission 17.

Le moyen de sécurité à l'ouverture 29, qui est avantageusement constitué en l'espèce par un doigt de sécurité mobile verticalement et sensible à la pression, coopère donc avec chacune desdites première pièce de transmission 17 et pièce de commande 24 pour bloquer le déplacement de ces dernières indépendamment l'une de l'autre, ce qui procure une double sécurité d'utilisation. En effet, si pour une raison ou pour une autre la liaison mécanique de blocage entre le moyen de sécurité à l'ouverture 29 et la première pièce de transmission 17 était rompue (à la suite de la casse d'une pièce par exemple), l'utilisateur ne serait malgré tout pas en mesure de procéder au déverrouillage du couvercle tant que le moyen de sécurité à l'ouverture 29 est en position de blocage dans la mesure où ledit moyen de sécurité à l'ouverture 29 continuerait à coopérer avec la pièce de commande 24 pour bloquer le déplacement de cette dernière. Bien entendu, le même raisonnement vaut si la liaison mécanique de blocage qui est interrompue est celle existant entre la pièce de commande 24 et le moyen de sécurité à l'ouverture 29.

Avantageusement, la pièce de commande 24 est conçue pour entraîner le moyen de sécurité à l'ouverture 29 en position de blocage lorsque le sélecteur 15 adopte au moins une position prédéterminée correspondante, correspondant par exemple à la configuration de verrouillage étanche avec régulation de pression à une première valeur de consigne. A cette fin, la pièce de commande 17 comprend avantageusement une rampe 31 conçue pour exercer une poussée verticale ascendante sur la deuxième collerette 29B, en vue de soulever le moyen de sécurité à l'ouverture 29 et de surmonter ainsi son poids pour le placer en position de blocage et l'empêcher de redescendre par gravité dans sa position basse de fuite. Une telle disposition permet d'accélérer la montée en pression, en évitant d'attendre que le moyen de sécurité à l'ouverture 29 adopte sa position de blocage de manière naturelle, sous le seul effet de la montée en pression.

Conformément aux modes de réalisation illustrés aux figures, le sélecteur 15 est avantageusement conçu pour commander le déplacement du moyen de réglage 8 de la valeur de consigne de l'organe de régulation 7 de la pression régnant dans l'enceinte. Le sélecteur 15 est en outre avantageusement conçu pour commander, outre le réglage du niveau de consigne, la décompression. A cet effet, le sélecteur 15 est avantageusement conçu d'une part pour adopter au moins une position prédéterminée dans laquelle il force la soupape 10 tarée à adopter une position de libération de l'orifice 9 permettant la mise en communication de l'intérieur de l'enceinte avec l'extérieur, et d'autre part pour déplacer le moyen de réglage 8 de la valeur de consigne afin de modifier le niveau de pression de consigne. Ainsi, de manière particulièrement avantageuse, le sélecteur 15 est capable d'exercer sur la butée coulissante 12 un effort de réglage suffisant pour faire coulisser la butée 12 et ajuster ainsi le tarage. En outre, le sélecteur 15 est avantageusement conçu pour adopter au moins une position prédéterminée (illustrée par exemple aux figures 4 à 6 et 13) dans laquelle il exerce sur la butée coulissante 12 l'effort de libération évoqué précédemment, afin d'entraîner la décompression.

Le sélecteur 15 permet ainsi de commander le verrouillage / déverrouillage, la décompression et le réglage du tarage de la soupape de régulation.

Pour cela, conformément aux modes de réalisation illustrés aux figures, le conduit 14 (au sein duquel est montée à coulissement la butée coulissante 12) est pourvu d'au moins une fente de guidage 32 tandis que la butée coulissante 12 est pourvue d'un axe 33 monté à coulissement (de préférence vertical) dans la fente de guidage 32 de façon à faire saillie de la surface extérieure du conduit 14 (comme illustré aux figures). L'organe de régulation 7 de la pression comprend en outre une bague de commande 34 pourvue d'une rampe de commande 35, ladite bague de commande 34 étant enfilée sur le conduit 14 de façon à pouvoir tourner autour du conduit 14 et ainsi commander le déplacement (axial) de l'axe 33 par rotation de la rampe de commande 35.

Afin de pouvoir être elle-même entraînée en rotation autour du conduit 14, la bague de commande 34 comprend avantageusement une fourche 36 à deux branches 36A, 36B, tandis que le sélecteur 15 comprend un téton 37 qui est conçu pour s'interposer entre lesdites branches 36A, 36B uniquement lorsque le sélecteur 15 parcourt ladite première fraction de sa course totale, la coopération du téton 37 et de la fourche 36 permettant de commander le déplacement de la bague de commande 34 (et donc le tarage et/ou la décompression) par le sélecteur 15.

Dans les modes de réalisation particulièrement avantageux illustrés aux figures, la deuxième pièce de transmission 18 comprend ainsi avantageusement la bague de commande 34 et sa fourche 36.

Avantageusement, le moyen de gestion de pression 6, le sélecteur 15, la première pièce de transmission 17, la pièce de commande 24 et la deuxième pièce de transmission 18, ainsi que, de manière générale, tous les éléments de commande soumis au sélecteur 15, sont montés dans un sous-ensemble unitaire constituant un module destiné à être rapporté et fixé, de préférence de manière amovible, sur le couvercle 1.

Le fonctionnement de la variante de réalisation des figures 1 à 19 va maintenant être décrit dans ce qui suit.

Le module de commande se trouve tout d'abord dans une configuration de verrouillage et décompression (illustrée à la figure 4) dans laquelle le moyen de verrouillage / déverrouillage 2 est en position de verrouillage tandis que la bague de commande 34 se trouve dans une position correspondant à la décompression de l'enceinte. A cet instant, le sélecteur 15 se trouve dans sa première position. En déplaçant le sélecteur 15 dans le sens antihoraire (par rapport au référentiel des figures), ledit sélecteur 15 va entraîner en rotation la bague de commande 34, par coopération du téton 37 et de la fourche 36 (qui assurent ainsi une liaison mécanique entre le sélecteur 15 et le moyen de gestion de pression 6), de manière à ce que cette dernière exerce une poussée descendante sur la butée coulissante 12 jusqu'à atteindre un premier niveau de consigne prédéterminé.

Durant la course opérée par la pièce de commande 24 entre la configuration illustrée à la figure 4 et celle de la figure 11 (correspondant à une régulation de pression à une première valeur de consigne), la pièce de commande 24 n'interagit pas avec la première pièce de transmission 17, c'est à dire que la pièce de transmission 17 et la pièce de commande 24 ne sont pas liées mécaniquement, de sorte que le sélecteur 15 et le moyen de verrouillage / déverrouillage 2 ne sont donc pas liés mécaniquement non plus. En revanche, la pièce de commande 24 entraîne avantageusement vers le haut (i.e. en position de blocage) le moyen de sécurité à l'ouverture 29.

Il est ainsi possible à l'utilisateur de tourner encore le sélecteur 15 dans le sens antihoraire jusqu'à atteindre une autre position de verrouillage étanche avec régulation de pression à une deuxième valeur de consigne, illustrée à la figure 12. La course du sélecteur 15 de la position illustrée à la figure 11 jusqu'à celle illustrée à la figure 12 entraîne une rotation correspondante de la pièce de commande 24, qui repousse la fourche 36 de manière à contraindre encore plus la butée coulissante 12 et atteindre ainsi un niveau de tarage supérieur à celui de la figure 11. Durant la course du sélecteur 15 de sa position illustrée à la figure 11 à celle illustrée à la figure 12, le sélecteur 15 n'interagit pas avec la première pièce de transmission 17, aucune liaison mécanique ne s'établissant entre la pièce de commande 24 et la première pièce de transmission 17, ni donc entre le sélecteur 15 et le moyen de verrouillage / déverrouillage 2. Afin d'effectuer le déverrouillage de l'appareil, l'utilisateur doit procéder, à partir de la configuration illustrée à la figure 12, à une rotation en sens horaire du sélecteur 15 jusqu'à la position de verrouillage et décompression de la figure 4. Dans la configuration de la figure 4, le sélecteur 15 agit sur la soupape tarée 10 pour la forcer à adopter sa position de décompression. Lorsque la configuration de la figure 4 est atteinte, le moyen de sécurité à l'ouverture 29 est en outre maintenu en position haute de blocage sous le seul effet de la pression et empêche tout déplacement supplémentaire du sélecteur 15 en sens horaire tant que la pression régnant dans l'enceinte n'a pas suffisamment baissé pour autoriser le retour du moyen de sécurité à l'ouverture 29 dans sa position basse. Il convient de relever que lors du passage du sélecteur 15 de sa configuration illustrée à la figure 12 à celle de la figure 4, le crochet 27 peut librement se déplacer relativement à la première pièce de transmission 17, sans rencontrer l'ergot d'entraînement 21 qui se trouve alors en position inactive. Une fois que le moyen de sécurité à l'ouverture 29 est retourné dans sa position basse, il est possible à l'utilisateur de faire subir au sélecteur 15 une rotation en sens horaire de sa première position vers sa deuxième position. Cela a pour effet d'entraîner, grâce au plot d'entraînement 28, la première pièce de transmission 17 en rotation horaire jusqu'à ce qu'elle atteigne sa deuxième position qui correspond au déverrouillage. La rotation de la première pièce de transmission 17 de sa première position vers sa deuxième position entraîne concomitamment le déplacement en position active de l'ergot d'entraînement 21. Le passage du sélecteur 15 de sa première position vers sa deuxième position a également pour effet de faire sortir le téton 37 hors de l'entrefer de la fourche 36, de sorte qu'il n'existe plus de liaison mécanique fonctionnelle entre le moyen de gestion de pression 6 et le sélecteur 15. La fourche 36 se retrouve alors immobilisée dans une position d'attente (illustrée à la figure 14), selon laquelle l'une des branches 36B de la fourche 36 interfère avec la trajectoire circulaire du téton 37 de façon à permettre un réengagement ultérieur de la fourche 36 par le téton 37.

Si l'utilisateur souhaite, à partir de cette configuration de déverrouillage, verrouiller à nouveau le couvercle, il procède alors à une rotation en sens antihoraire du sélecteur 15, ce qui a pour effet d'amener le crochet 27 contre l'ergot d'entraînement 21. Le crochet 27 permet ainsi de repousser l'ergot d'entraînement 21, lequel entraîne avec lui la première pièce de transmission 17 qui quitte sa deuxième position (correspondant au déverrouillage), laquelle forme donc une position d'équilibre instable. La première pièce de transmission 17 est alors brutalement rappelée par le ressort 210 et la force de rappel à laquelle est soumis le moyen de verrouillage / déverrouillage 2, ce qui entraîne concomitamment le retour en position inactive de la roue d'entraînement 21.

### POSSIBILITE D'APPLICATION INDUSTRIELLE

L'invention trouve son application industrielle dans la conception, la fabrication et l'utilisation d'appareils de cuisson.

## Revendications

1. - Appareil de cuisson d'aliments sous pression comprenant :
- une cuve et un couvercle (1) destinés à être associés pour former une enceinte de cuisson,
- un moyen de verrouillage / déverrouillage (2) monté mobile sur le couvercle (1) entre une position de verrouillage et une position de déverrouillage du couvercle (1) relativement à la cuve,
- un moyen de gestion de pression (6) conçu pour agir sur le niveau de pression régnant dans l'appareil,
- et un sélecteur (15) déplaçable manuellement selon une course totale prédéterminée pour commander au moins ledit moyen de gestion de pression (6) et le déplacement du moyen de verrouillage / déverrouillage (2),
ledit appareil étant **caractérisé en ce que** le sélecteur (15) n'est lié mécaniquement au moyen de gestion de pression (6) que sur une première fraction de ladite course totale prédéterminée.

2. - Appareil selon la revendication 1 **caractérisé en ce que** le moyen de verrouillage / déverrouillage (2) est monté à translation sur le couvercle (1).

3. - Appareil selon la revendication 1 ou 2 **caractérisé en ce que** le sélecteur (15) n'est lié mécaniquement au moyen de verrouillage / déverrouillage (2) que sur une deuxième fraction de ladite course totale prédéterminée.

4. - Appareil selon la revendication 3 **caractérisé en ce que** lesdites première et deuxième fractions de la course totale sont sensiblement au moins partiellement distinctes.

5. - Appareil selon l'une des revendications 2 à 4 **caractérisé en ce qu'**il comprend une première pièce de transmission (17) qui d'une part est mobile relativement au moyen de verrouillage / déverrouillage (2) et d'autre part est conçue pour agir sur la position dudit moyen de verrouillage / déverrouillage (2) en réponse à un déplacement correspondant du sélecteur (15).

6. - Appareil selon la revendication 5 **caractérisé en ce que** ladite première pièce de transmission (17) est conçue pour pouvoir se déplacer pendant que le sélecteur (15) reste sensiblement immobile et/ou rester sensiblement immobile pendant que le sélecteur (15) se déplace.

7. - Appareil selon la revendication 6 **caractérisé en ce que** la première pièce de transmission (17) est conçue pour rester sensiblement immobile lorsque le sélecteur (15) se déplace selon au moins une portion de ladite première fraction de la course totale.

8. - Appareil selon l'une des revendications 1 à 7 **caractérisé en ce que** le moyen de gestion de pression (6) est mobile entre une pluralité de positions, ledit appareil comprenant une deuxième pièce de transmission (18) qui d'une part est mobile relativement au moyen de gestion de pression (6) et d'autre part est conçue pour agir sur la position dudit moyen de gestion de pression (6) en réponse à un déplacement correspondant du sélecteur (15).

9. - Appareil selon la revendication 8 **caractérisé en ce que** ladite deuxième pièce de transmission (18) est conçue pour pouvoir se déplacer pendant que le sélecteur (15) reste sensiblement immobile et/ou rester sensiblement immobile pendant que le sélecteur (15) se déplace.

10. -Appareil selon les revendications 3 et 9 **caractérisé en ce que** la deuxième pièce de transmission (18) est conçue pour rester sensiblement immobile lorsque le sélecteur (15) se déplace selon au moins une portion de ladite deuxième fraction de la course totale.

11. -Appareil selon l'une des revendications 1 à 10 **caractérisé en ce qu'**il comprend un organe de régulation (7) de la pression régnant dans l'enceinte de cuisson à une valeur de consigne, le moyen de gestion de pression (6) comprenant un moyen de réglage (8) de cette valeur de consigne qui est mobile entre une pluralité de positions correspondant à des valeurs de consigne respectives, ledit sélecteur étant conçu pour commander le déplacement dudit moyen de réglage (8).

12. -Appareil selon la revendication 11 **caractérisé en ce que** le moyen de gestion de pression (6) comprend un moyen de décompression mobile entre une position de décompression permettant de faire chuter la pression régnant dans l'enceinte et une position étanche n'entraînant sensiblement pas de chute de pression dans l'enceinte, l'organe de régulation (7) de pression formant le moyen de décompression.

13. -Appareil selon la revendication 12 **caractérisé en ce que** l'organe de régulation (7) de la pression comprend un orifice (9) de mise en communication de l'intérieur de l'enceinte avec l'extérieur et une soupape tarée (10), le sélecteur (15) étant conçu d'une part pour adopter au moins une position prédéterminée dans laquelle il force la soupape tarée (10) à adopter une position de libération de l'orifice permettant la mise en communication de l'intérieur de l'enceinte avec l'extérieur, et d'autre part pour déplacer le moyen de réglage (8) de la valeur de consigne afin de modifier le niveau de pression de consigne, l'organe de régulation (7) de pression comprenant :
- un corps élastique pour tarer ladite soupape (10)
- et une butée coulissante (12) formant le moyen de réglage (8) de la valeur de consigne,
ledit corps élastique étant interposé entre ladite soupape (10) et la butée coulissante (12) et exerçant un effort d'appui sur cette dernière, le sélecteur (15) étant capable d'exercer sur ladite butée un effort de réglage suffisant pour faire coulisser la butée (12) et ajuster ainsi le tarage.

14. -Appareil selon la revendication 13 **caractérisé en ce que** ladite butée (12) est conçue pour entraîner la soupape (10) dans sa position de libération de l'orifice lorsque ladite butée (12) est soumise à un effort de libération suffisant de même sens que l'effort d'appui, le sélecteur (15) étant conçu pour adopter au moins une position prédéterminée dans laquelle il exerce cet effort de libération sur la butée afin d'entraîner la décompression, l'organe de régulation (7) de la pression comprenant un conduit (14) au sein duquel est montée à coulissement ladite butée coulissante (12), le conduit (14) étant pourvu d'au moins une fente de guidage (32) tandis que la butée (12) est pourvue d'un axe (33) monté à coulissement dans la fente de guidage (32) de façon à faire saillie de la surface extérieure du conduit (14), l'organe de régulation (7) de la pression comprenant en outre une bague de commande (34) pourvue d'une rampe de commande (35), ladite bague (34) étant enfilée sur le conduit (14) de façon à pouvoir tourner autour du conduit (14) et ainsi commander le déplacement de l'axe (33) par rotation de la rampe de commande (35).

15. -Appareil selon les revendications 8 et 14 **caractérisé en ce que** la deuxième pièce de transmission (18) comprend ladite bague de commande (34).

## Patentansprüche

1. Gerät zum Garen von Speisen unter Druck, umfassend:
- einen Behälter und einen Deckel (1), die dazu bestimmt sind, verbunden zu werden, um einen Kochbehälter zu bilden,
- ein Verriegelungs-/Entriegelungsmittel (2), das auf dem Deckel (1) beweglich zwischen einer Verriegelungsposition und einer Entriegelungsposition des Deckels (1) in Bezug zum Behälter montiert ist,
- ein Druckregulierungsmittel (6), das dazu vorgesehen ist, auf das in dem Gerät herrschende Druckniveau einzuwirken,
- und einen Wahlschalter (15), der manuell auf einer vorbestimmten Gesamtstrecke verschiebbar ist, um mindestens das Druckregulierungsmittel (6) und die Verschiebung des Verriegelungs-/Entriegelungsmittels (2) zu betätigen,
wobei das Gerät **dadurch gekennzeichnet ist, dass** der Wahlschalter (15) mechanisch mit dem Druckregulierungsmittel (6) nur auf einem ersten Teilstück der vorbestimmten Gesamtstrecke verbunden ist.

2. Gerät nach Anspruch 1, **dadurch gekennzeichnet, dass** das Verriegelungs-/Entriegelungsmittel (2) in Translation auf dem Deckel (1) montiert ist.

3. Gerät nach Anspruch 1 oder 2, **dadurch gekennzeichnet, dass** der Wahlschalter (15) mechanisch mit dem Verriegelungs-/Entriegelungsmittel (2) nur auf einem zweiten Teilstück der vorbestimmten Gesamtstrecke verbunden ist.

4. Gerät nach Anspruch 3, **dadurch gekennzeichnet, dass** die ersten und zweiten Teilstücke der Gesamtstrecke im Wesentlichen zumindest teilweise unterschiedlich sind.

5. Gerät nach einem der Ansprüche 2 bis 4, **dadurch gekennzeichnet, dass** es ein erstes Übertragungsstück (17) umfasst, das einerseits in Bezug zum Verriegelungs-/Entriegelungsmittel (2) beweglich ist, und das andererseits derart ausgeführt ist, dass es als Antwort auf eine entsprechende Verschiebung des Wahlschalters (15) auf die Position des Verriegelungs-/Entriegelungsmittels (2) einwirkt.

6. Gerät nach Anspruch 5, **dadurch gekennzeichnet, dass** das erste Übertragungsstück (17) derart ausgeführt ist, dass es sich verschieben kann, während der Wahlschalter (15) im Wesentlichen unbeweglich bleibt, und/oder im Wesentlichen unbeweglich bleiben kann, während sich der Wahlschalter (15) verschiebt.

7. Gerät nach Anspruch 6, **dadurch gekennzeichnet, dass** das erste Übertragungsstück (17) derart ausgeführt ist, dass es im Wesentlichen unbeweglich bleibt, wenn sich der Wahlschalter (15) entlang mindestens eines Abschnitts des ersten Teilstücks der Gesamtstrecke verschiebt.

8. Gerät nach einem der Ansprüche 1 bis 7, **dadurch gekennzeichnet, dass** das Druckregulierungsmittel (6) zwischen einer Vielzahl von Positionen beweglich ist, wobei das Gerät ein zweites Übertragungsstück (18) umfasst, das einerseits in Bezug zum Druckregulierungsmittel (6) beweglich ist, und das andererseits derart ausgeführt ist, dass es als Antwort auf eine entsprechende Verschiebung des Wahlschalters (15) auf die Position des Druckregulierungsmittels (6) einwirkt.

9. Gerät nach Anspruch 8, **dadurch gekennzeichnet, dass** das zweite Übertragungsstück (18) derart ausgeführt ist, dass es sich verschieben kann, während der Wahlschalter (15) im Wesentlichen unbeweglich bleibt, und/oder im Wesentlichen unbeweglich bleiben kann, während sich der Wahlschalter (15) verschiebt.

10. Gerät nach den Ansprüchen 3 und 9, **dadurch gekennzeichnet, dass** das zweite Übertragungsstück (18) derart ausgeführt ist, dass es im Wesentlichen unbeweglich bleibt, wenn sich der Wahlschalter (15) entlang mindestens eines Abschnitts des zweiten Teilstücks der Gesamtstrecke verschiebt.

11. Gerät nach einem der Ansprüche 1 bis 10, **dadurch gekennzeichnet, dass** es ein Element zum Regeln (7) des in dem Kochbehälter herrschenden Drucks auf einen Sollwert umfasst, wobei das Druckregulierungsmittel (6) ein Mittel zum Einstellen (8) dieses Sollwerts umfasst, das zwischen einer Vielzahl von Positionen entsprechend jeweiligen Sollwerten beweglich ist, wobei der Wahlschalter dazu vorgesehen ist, die Verschiebung des Mittels zum Einstellen (8) zu steuern.

12. Gerät nach Anspruch 11, **dadurch gekennzeichnet, dass** das Druckregulierungsmittel (6) ein Druckentlastungsmittel umfasst, das zwischen einer Druckentlastungsposition, die es ermöglicht, den in dem Behälter herrschenden Druck abfallen zu lassen, und einer Abdichtposition, die im Wesentlichen keinen Druckabfall in dem Behälter bewirkt, beweglich ist, wobei das Element zum Regeln (7) des Drucks das Druckentlastungsmittel bildet.

13. Gerät nach Anspruch 12, **dadurch gekennzeichnet, dass** das Element zum Regeln (7) des Drucks eine Öffnung (9) zur Verbindung des Inneren des Behälters mit außen und ein tariertes Ventil (10) umfasst, wobei der Wahlschalter (15) einerseits dazu vorgesehen ist, mindestens eine vorbestimmte Position einzunehmen, in der er das tarierte Ventil (10) dazu bringt, eine Freigabeposition der Öffnung anzunehmen, die die Verbindung des Inneren des Behälters mit außen ermöglicht, und andererseits das Mittel zum Einstellen (8) des Sollwerts zu verschieben, um das Solldruckniveau zu verändern, wobei das Element zum Regeln (7) des Drucks umfasst:
- einen elastischen Körper zum Tarieren des Ventils (10)
- und einen Gleitanschlag (12), der das Mittel zum Einstellen (8) des Sollwerts bildet,
wobei der elastische Körper zwischen dem Ventil (10) und dem Gleitanschlag (12) angeordnet ist und eine Druckkraft auf diesen letztgenannten ausübt, wobei der Wahlschalter (15) ausgelegt ist, auf den Anschlag eine ausreichende Einstellkraft auszuüben, um den Anschlag (12) zum Gleiten zu bringen und so die Tarierung anzupassen.

14. Gerät nach Anspruch 13, **dadurch gekennzeichnet, dass** der Anschlag (12) derart ausgeführt ist, dass er das Ventil (10) in seine Position zur Freigabe der Öffnung bringt, wenn der Anschlag (12) einer ausreichenden Freigabekraft in dieselbe Richtung wie die Haltekraft ausgesetzt ist, wobei der Wahlschalter (15) derart ausgeführt ist, dass er mindestens eine vorbestimmte Position einnimmt, in der er diese Freigabekraft auf den Anschlag ausübt, um die Druckentlastung herbeizuführen, wobei das Element zum Regeln (7) des Drucks eine Führung (14) umfasst, in der der Gleitanschlag (12) gleitend montiert ist, wobei die Führung (14) mit mindestens einem Führungsschlitz (32) versehen ist, während der Anschlag (12) mit einer Achse (33) versehen ist, die gleitend in dem Führungsschlitz (32) montiert ist, um aus der Außenfläche der Führung (14) hinauszuragen, wobei das Element zum Regeln (7) des Drucks ferner einen Steuerring (34) umfasst, der mit einer Betätigungsrampe (35) versehen ist, wobei der Ring (34) derart auf die Führung (14) geschoben ist, dass er sich um die Führung (14) drehen und so die Verschiebung der Achse (33) durch Drehung der Betätigungsrampe (35) bewirken kann.

15. Gerät nach den Ansprüchen 8 und 14, **dadurch gekennzeichnet, dass** das zweite Übertragungsstück (18) den Steuerring (34) umfasst.

## Claims

1. Food pressure-cooking appliance comprising:
- a pot and a lid (1) intended to be associated with each other to form a cooking chamber,
- a locking / unlocking means (2) mounted on the lid (1) so as to be movable between a position for locking and a position for unlocking the lid (1) relative to the pot,
- a pressure management means (6) adapted to act on the level of pressure inside the appliance,
- and a selector (15) manually movable over a predetermined total stroke to control at least said pressure management means (6) and the displacement of the locking / unlocking means (2),
said appliance being **characterized in that** the selector (15) is mechanically connected to the pressure management means (6) over only a first fraction of said predetermined total stroke.

2. The appliance according to claim 1, **characterized in that** the locking I unlocking means (2) is mounted for translation on the lid (1).

3. The appliance according to claim 1 or 2, **characterized in that** the selector (15) is mechanically connected to the locking / unlocking means (2) over only a second fraction of said predetermined total stroke.

4. The appliance according to claim 3, **characterized in that** said first and second fractions of the total stroke are substantially at least partially distinct from each other.

5. The appliance according to one of claims 2 to 4, **characterized in that** its comprises a first transmission part (17) that, on the one hand, is movable relative to the locking / unlocking means (2), and on the other hand, is adapted to act on the position of said locking / unlocking means (2) in response to a corresponding displacement of the selector (15).

6. The appliance according to claim 5, **characterized in that** said first transmission part (17) is adapted to be able to move while the selector (15) remains substantially stationary and/or to remain substantially stationary while the selector (15) moves.

7. The appliance according to claim 6, **characterized in that** said first transmission part (17) is adapted to remain substantially stationary while the selector (15) moves over at least one portion of said first fraction of the total stroke.

8. The appliance according to one of claims 1 to 7, **characterized in that** the pressure management means (6) is movable between a plurality of positions, said appliance comprising a second transmission part (18) that, on the one hand, is movable relative to the pressure management means (6), and on the other hand, is adapted to act on the position of said pressure management means (6) in response to a corresponding displacement of the selector (15).

9. The appliance according to claim 8, **characterized in that** said second transmission part (18) is adapted to be able to move while the selector (15) remains substantially stationary and/or to remain substantially stationary while the selector (15) moves.

10. The appliance according to claims 3 and 9, **characterized in that** the second transmission part (18) is adapted to remain substantially stationary while the selector (15) moves over at least one portion of said second fraction of the total stroke.

11. The appliance according to one of claims 1 to 10, **characterized in that** it comprises a member (7) for regulating the pressure inside the cooking chamber at a set value, the pressure management means (6) comprising a means (8) for setting this set value, which is movable between a plurality of positions corresponding to respective set values, said selector being adapted to control the displacement of said setting means (8).

12. The appliance according to claim 11, **characterized in that** the pressure management means (6) comprises a decompression means movable between a decompression position for making the pressure inside the chamber decrease, and a sealed position generating substantially no pressure decrease in the chamber the pressure regulating member (7) forming the decompression means.

13. The appliance according to claim 12, **characterized in that** the pressure regulating member (7) comprises an orifice (9) for placing the inside of the chamber in communication with the outside and a calibrated valve (10), the selector (15) being adapted, on the one hand, to adopt at least one predetermined position in which it forces the calibrated valve (10) to adopt a position for clearing the orifice, for placing the inside of the chamber in communication with the outside, and on the other hand, to displace the set-value setting means (8) in order to modify the set level of pressure, the pressure regulating member (7) comprising:
- an elastic body to calibrate said valve (10),
- and a sliding stop (12) forming the set-value setting means (8).
said elastic body being interposed between said valve (10) and the sliding stop (12) and exerting a pressing effort to the latter, the selector (15) being capable of exerting on said stop a setting effort that is sufficient to make the stop (12) sliding and to therefore adjust the calibration.

14. The appliance according to claim 14, **characterized in that** said stop (12) is adapted to drive the valve (10) to its position for clearing the orifice when said stop (12) is subjected to a sufficient clearing effort, of same direction as the pressing effort, the selector (15) being adapted to adopt at least one predetermined position in which it exerts this clearing effort on the stop to causes the decompression the pressure regulating member (7) comprising a duct (14) within which the sliding stop (12) is slidingly mounted, the duct (14) being provided with at least one guiding slot (32), whereas the stop (12) is provided with a shaft (33) slidingly mounted in the guiding slot (32), so as to protrude from the external surface of the duct (14), the pressure regulating member (7) further comprises a control ring (34) provided with a control ramp (35), said ring (34) being threaded on the duct (14) so as to be able to turn around the duct (14) and therefore to control the displacement of the shaft (33) by rotation of the control ramp (35).

15. The appliance according to claims 8 and 14, **characterized in that** the second transmission part (18) comprises said control ring (34).
